# EUROPÄISCHE PATENTSCHRIFT

(11) **EP 3 125 814 B1**
(45) Veröffentlichungstag und Bekanntmachung des Hinweises auf die Patenterteilung: **08.01.2020**
(21) Anmeldenummer: 15706227.4
(22) Anmeldetag: 24.02.2015
(51) Int. Cl.: A61C 5/80, A61C 5/82

(54) **VORRICHTUNG ZUR ABSCHIRMUNG VON ZU BEHANDELNDEN ZÄHNEN**
DEVICE FOR SHIELDING TEETH TO BE TREATED
DISPOSITIF DE PROTECTION DE DENTS À TRAITER

(30) Priorität: 24.02.2014 DE 202014001569 U; 29.12.2014 DE 202014010138 U
(43) Veröffentlichungstag der Anmeldung: 08.02.2017
(73) Patentinhaber: Mühlbauer Technology GmbH, 22547 Hamburg (DE)
(72) Erfinder: HEYMANN, Rudolf, 21502 Geesthacht (DE); PAULS, Harald, 22549 Hamburg (DE); MEYER, Sven, 21641 Apensen (DE)
(74) Vertreter: Glawe, Delfs, Moll
(86) Internationale Anmeldenummer: PCT/EP2015/053776
(87) Internationale Veröffentlichungsnummer: WO 2015/124785

(56) Entgegenhaltungen:
- WO-A1-96/39984
- JP-A- S5 631 745
- US-A- 3 478 432
- US-A1- 2004 219 486

## Beschreibung

Die Erfindung betrifft eine Vorrichtung zur Abschirmung von zu behandelnden Zähnen, um den Zufluss von Flüssigkeit wie bspw. Speichel oder Blut zu verhindern, sowie eine Verwendung der erfindungsgemäßen Vorrichtung.

Im Stand der Technik - bspw. aus der WO 96/39984 - ist es bekannt, zur Abschirmung eines zu behandelnden Zahns vom übrigen Mundraum einen sog. Kofferdam zu verwenden, so dass jeglicher Zufluss von Speichel zu dem zu behandelnden Zahn unterbunden wird. Gleichzeitig kann verhindert werden, dass zahnärztliche Flüssigkeiten, Pasten o. ä. mit anderen als dem zu behandelnden Zahn in Berührung kommen oder verschluckt werden können. Der Kofferdam kann den gesamten Mundraum eines Patienten abdecken. Es sind aber auch Kofferdamtücher verfügbar, die nur einen Teil des Mundraums abdecken.

Ein Kofferdam ist auch aus US 5 360 341 bekannt.

Bei dem Kofferdam handelt es sich um ein flüssigkeitsundurchlässiges Tuch, meist aus elastischem Kunststoff oder Gummi, mit einer Öffnung für den zu behandelnden Zahn. Der Kofferdam muss mit Klammern, Keilen und/oder sonstigen Hilfsmitteln aufgespannt und zwischen den Zähnen des Patienten festgeklemmt werden. Das Anlegen eines Kofferdams durch einen Zahnarzt ist dabei sehr zeitaufwendig und für den Patienten häufig unangenehm oder sogar schmerzhaft. Aufgrund der letztgenannten Nachteile ist nur eine geringe Akzeptanz des Kofferdams in der zahnärztlichen Praxis zu beobachten.

Aufgabe der vorliegenden Erfindung ist es, eine Vorrichtung zur Abschirmung von zu behandelnden Zähnen zu schaffen, welche die im Stand der Technik bekannten Nachteile nicht mehr oder nur noch in einem geringeren Umfang aufweist.

Gelöst wird diese Aufgabe durch einen Teilkofferdam gemäß dem Hauptanspruch sowie der Verwendung gemäß dem nebengeordneten Anspruch. Vorteilhafte Weiterbildungen sind Gegenstand der abhängigen Ansprüche.

Demnach betrifft die Erfindung einen Teilkofferdam zur Abschirmung von zu behandelnden Zähnen umfassend ein Spanntuch aus elastischem Material und zwei an gegenüberliegenden Enden des Spanntuchs angeordnete Betätigungselemente, wobei das Spanntuch an einem ersten, durch Auseinanderziehen der Betätigungselemente in eine Zugrichtung erreichbaren gespannten Zustand zur Einführung von okklusal in wenigstens einen Zahnzwischenraum und in einem zweiten Zustand nach Einführung in wenigstens einen Zahnzwischenraum zur dichten Anlage an der interdentalen Gingiva und den Approximalflächen der den wenigstens einen Zahnzwischenraum bildenden Zähne ausgebildet ist, wobei die Betätigungselemente im entspannten Einsatzzustand des Spanntuchs jeweils an wenigstens einem Zahn (vorzugsweise an der Glattfläche wenigstens eines Zahns) und/oder an der umgebenden Gingiva anliegen.

Durch das Auseinanderziehen der Betätigungselemente wird das Spanntuch derart elastisch verformt, dass es von okklusal je nach Formgebung des Spanntuchs gut in einen oder mehrere Zahnzwischenräume eingeführt werden kann. Die elastische Verformung resultiert dabei in einer Verkleinerung des Querschnitts des Spanntuchs, sodass dieses gut an den Zahnkronen vorbei in den Zahnzwischenraum eingeführt werden kann. Nachdem das Spanntuch in den Zahnzwischenraum eingeführt ist, kann die Spannung gelöst werden, womit das Spanntuch sich wieder seiner ursprünglichen Form annähert. Das Spanntuch wird so dicht bzw. abdichtend an den, den wenigstens einen Zahnzwischenraum bildenden Zähnen sowie der interdentalen Gingiva angelegt und die gewünschte Abschirmung des wenigstens einen Zahnzwischenraums wird erreicht.

Im zweiten Zustand können die Betätigungselemente an einem oder mehreren Zähnen - insbesondere an deren Glattflächen - und/oder der Gingiva anliegen und so den Teilkofferdam stabilisieren. Zusätzliche Befestigungs- oder Klemmvorrichtungen zur Sicherung des Spanntuchs sind bei dem erfindungsgemäßen Teilkofferdam nicht erforderlich und nicht vorgesehen.

Der Erfindung liegt die Erkenntnis zugrunde, dass für eine Vielzahl von zahnärztlichen Prozeduren eine vollständige Trockenlegung, wie sie durch einen Kofferdam gemäß dem Stand der Technik erreicht wird, nicht erforderlich ist. Es ist in vielen Fällen vielmehr ausreichend, lediglich den zu behandelnden Zahn oder zumindest einen Teilbereich davon trocken zu halten. Eine solche Trockenlegung kann mit dem erfindungsgemäßen Teilkofferdam erreicht werden. Der in wenigstens einen Zahnzwischenraum eingeführte Teilkofferdam kann nämlich verhindern, dass Speichel oder eine sonstige Flüssigkeit von der Gingiva aus in den wenigstens einen Zahnzwischenraum gelangen kann.

Gegenüber einem Kofferdam bietet der erfindungsgemäße Teilkofferdam den Vorteil, dass der behandelnde Zahnarzt nicht mehr mit mehreren Elementen - Kofferdamtuch und Klemmelementen - hantieren muss. Außerdem sind für die Verwendung des erfindungsgemäßen Teilkofferdams anders als im Stand der Technik nicht zwingend Instrumente wie Zangen o. ä. erforderlich. Der erfindungsgemäße Teilkofferdam ist einfach zu handhaben und lässt sich schnell anlegen.

Vorzugsweise weist das Spanntuch eine der Anzahl der abzudichtenden Zwischenräume entsprechende Anzahl an Stegen auf, die sich zwischen den Betätigungselementen erstrecken. Die Stege können dann jeweils in einen abzudichtenden Zwischenraum eingeführt werden. Soll nur ein Zahnzwischenraum abgedichtet werden, ist es ausreichend, wenn das Spanntuch lediglich einen Steg aufweist. Ist mehr als ein Steg vorgesehen, so ist zwischen den Stegen ein Freiraum vorgesehen, durch den einzelne Zähne, insbesondere Molare oder Prämolare, hindurchgeführt werden können.

Der wenigstens eine Steg ist vorzugsweise flach ausgestaltet, wobei die Dicke des Spanntuchs im Bereich eines Stegs (d. h. die Ausdehnung senkrecht zur Oberfläche der Gingiva) im zweiten Zustand deutlich geringer ist als die Breite des jeweiligen Stegs (d. h. die Ausdehnung senkrecht zur Zugachse und parallel zur Oberfläche der Gingiva). Die Dicke des Spanntuchs oder eines Stegs ist im entspannten Zustand des Teilkofferdams vorzugsweise kleiner gleich 1 mm, weiter vorzugsweise zwischen 0,1 mm und 0,5 mm, weiter vorzugsweise zwischen 0,1 mm und 0,3 mm. Ein Steg ist an seiner schmalsten Stelle im entspannten Zustand vorzugsweise 2 mm bis 8 mm, weiter vorzugsweise 3 mm bis 7 mm, weiter vorzugsweise 5 mm bis 6 mm breit. In einer alternativen Ausführung kann ein Steg an seiner schmalsten Stelle im entspannten Zustand auch vorzugsweise 1,5 mm bis 5 mm, weiter vorzugsweise 2 mm bis 3 mm, weiter vorzugsweise 2,5 mm breit sein. Der Abstand zwischen den beiden Betätigungselementen im Ausgangszustand und damit die Länge des Spanntuchs im entspannten Zustand beträgt vorzugsweise weniger als 10 mm, weiter vorzugsweise 4 mm bis 8 mm, weiter vorzugsweise 4,5 mm bis 6,5 mm, weiter vorzugsweise 5,5 mm.

Vorzugsweise ist der wenigstens eine Steg in Form eines abgerundeten Doppel-T ausgestaltet. Bei einem entsprechenden Steg sind die den Betätigungselementen naheliegenden Seitenbereiche des Stegs also breiter als ein diese Bereiche verbindender Mittelsteg, wobei die Übergänge vom Mittelsteg zu den Seitenbereichen abgerundet sind. Durch die Form eines abgerundeten Doppel-T legt sich der entsprechend ausgestaltete Steg gut dichtend an die beiden Zähne an, zwischen denen der Mittelsteg des Doppel-T eingeführt ist.

Muss nur ein Zahnzwischenraum abgedichtet werden, ist es ausreichend, wenn lediglich ein Steg in Form eines abgerundeten Doppel-T vorgesehen ist. Sollen mehr als ein Zahnzwischenraum abgedichtet werden, so kann das Spanntuch mehrere nebeneinander angeordnete Doppel-T-Stege aufweisen, wobei die Anzahl der Doppel-T-Flächen der Anzahl der abzudichtenden Zahnzwischenräume entspricht und die Seitenbereiche nebeneinanderliegende Stege ineinander übergehen können. Für die Behandlung der Approximalflächen zweier benachbarter Zähne oder die Behandlung eines einzelnen Zahns kann also ein Spanntuch mit einem Steg ausreichend sein. Für die Behandlung der Approximalflächen dreier benachbarter Zähne oder für eine MOD-Füllung eines einzelnen Zahns weist das Spanntuch vorzugsweise zwei Doppel-T-Stege auf.

Zur besseren Anlage der Betätigungselemente an wenigstens einen Zahn und/oder die Gingiva im zweiten Zustand des erfindungsgemäßen Teilkofferdamm ist vorzugsweise wenigstens ein Gurt zwischen den beiden Betätigungselementen vorgesehen, wobei der Gurt in der Ebene des wenigstens einen Stegs verläuft und derart ausgestaltet ist, dass er in einen zu einem Zahnzwischenraum, in den der wenigstens eine Steg eingeführt wird, benachbarten Zahnzwischenraum eingeführt werden kann. Der wenigstens eine Gurt wird - wie der wenigstens eine Steg - im ersten Zustand des erfindungsgemäßen Teilkofferdamms elastisch verformt und unterstützt im zweiten Zustand des Teilkofferdams die Anlage der Betätigungselemente an wenigstens einem Zahn und/oder an der umgebenden Gingiva. Der wenigstes eine Gurt kann dabei dem wenigstens einen Steg ähneln, wobei jedoch eine dichtende Anlage an der interdentalen Gingiva und den Approximalflächen der Zähne, zwischen die der Gurt eingeführt ist, nicht erforderlich ist.

Es ist bevorzugt, wenn zwei Gurte vorgesehen sind, wobei der wenigstens eine Steg zwischen den beiden Gurten angeordnet ist.

Der zwischen zwei benachbarten Stegen oder einem Steg und einem Gurt entstehende Freiraum ist vorzugsweise rund, kreisrund oder oval, vorzuweise elliptisch ausgestaltet. Bei einer elliptischen Ausgestaltung ist vorzugsweise die Halbachse parallel zu den Mittelstegen der beiden benachbarten Stege bzw. parallel zu dem Mittelsteg des Stegs und der Längserstreckung des Gurts kleiner als die dazu senkrecht stehende Halbachse. Beispielsweise können die Halbachsen 1,1 mm und 2,5 mm lang sein. Grundsätzlich ist der wenigstens eine Freiraum vorzugsweise so dimensioniert, dass er zum Hindurchführen von Prämolaren oder Molaren geeignet ist. Durch eine entsprechende Ausgestaltung des Freiraums zwischen zwei benachbarten Stegen bzw. Steg und Gurt wird bei dem erfindungsgemäßen Teilkofferdam im ersten Zustand ein einfaches Einführen der Stege und/oder Gurte in Zahnzwischenräume ermöglicht, wobei jeweils ein Zahn durch den genannten Freiraum geführt wird.

Die Betätigungselemente sind bevorzugt einstückig mit dem Spanntuch ausgestaltet. Auch der wenigstens eine Gurt kann bevorzugt einstückig mit dem Betätigungselement und dem Spanntuch ausgestaltet sein. Da in diesem Fall die Betätigungselemente wie das Spanntuch und/oder der wenigstens eine Gurt aus grundsätzlich elastischem Material sind, sind sie hinsichtlich der Form und Größe so auszugestalten, dass sie auch bei der Zugbelastung im ersten Zustand des Teilkofferdams im Wesentlichen formstabil sind. Die Betätigungselemente können bevorzugt wenigstens teilweise eine höhere Dicke als das Spanntuch aufweisen.

Es ist bevorzugt, wenn der Teilkofferdamm im entspannten Zustand einen bogenförmigen oder u-förmigen Querschnitt aufweist, sodass das Spanntuch im entspannten Zustand eine Krümmung senkrecht zum Mittelsteg des wenigstens einen Steges aufweist und die beiden Betätigungselemente um eine Ebene normal zur Richtung des Mittelstegs des wenigstens einen Stegs gespiegelt angeordnet sind. Durch eine entsprechende Formgebung des Teilkofferdamms wird dessen Anwendung vereinfacht.

Erfindungsgemäß sind die Betätigungselemente u-förmig ausgestaltet, wobei das offene Ende der Betätigungselemente zum Spanntuch zeigt. Durch eine entsprechende Formgebung verbessert sich die Stütz- und Stabilisatorfunktion der Betätigungselemente im zweiten Zustand des Teilkofferdams.

Bei einem bogenförmigen oder u-förmigen Querschnitt des Teilkofferdamms im entspannten Zustand können die Schenkel der u-förmigen Betätigungselemente über das gekrümmt verlaufende Spanntuch hinausragen. Es können dann die jeweils gegenüberliegenden Schenkel der u-förmigen Betätigungselemente über elastisch verformbare Zusatzgurte miteinander verbunden sein. Die Zusatzgurte liegen dann im entspannten Zustand des Teilkofferdamms nicht in einer Ebene mit dem wenigstens einen Steg und/oder einem Gurt, sondern verlaufen davon beabstandet. Durch entsprechende Zusatzgurte kann die Anlage der Betätigungselemente im zweiten Zustand des Teilkofferdamms weiter verbessert werden, sodass insbesondere die Gefahr eines Verrutschens der Betätigungselemente weiter verringert wird. Die Zusatzgurte können einstückig mit den Betätigungselementen ausgeführt sein.

Auch wenn für die Verwendung des erfindungsgemäßen Teilkofferdams grundsätzlich keine Instrumente erforderlich sind, können dennoch Öffnungen in den Betätigungselementen vorgesehen sein, in die bspw. eine medizinische Zange eingreifen kann. Mithilfe einer Zange kann der Teilkofferdam dann gespannt und in mit rein manueller Handhabung nur schwer zugängliche Zahnzwischenräume eingeführt werden.

Das Spanntuch weist bevorzugt eine Dehnbarkeit von 1 bis 4, weiter vorzugsweise von 2 bis 3 bei nahezu vollständigem Rückstellvermögen auf. Das bedeutet, dass beim Spanntuch eine Längenänderung von 100 % bis 400 % bzw. 200 % bis 300 % gegenüber der ursprünglichen Länge möglich ist, ohne dass sich dabei eine sichtbare plastische Dehnung zeigt. In anderen Worten soll die Zugbeanspruchung bei der angegebenen Dehnung des Spanntuchs unterhalb der Streckgrenze, zumindest jedoch unter der 0,2%-Dehngrenze des Spanntuchs liegen.

Vorzugsweise weist das Spanntuch eine Reißfestigkeit gemäß DIN 53504:2009-10 von größer 5 N/mm² auf, wobei die Reisfestigkeit insbesondere anhand von S3-Prüfkörpern ermittelt werden kann.

Als Material für das Spanntuch und/oder die Betätigungselemente sind alle Materialen mit ausreichenden elastischen Eigenschaften geeignet. Vorzugsweise sind das Spanntuch und/oder die Betätigungselemente aus Silikon oder Latex, weiter vorzugsweise aus 2-Komponenten-Silikonen oder einem thermoplastischen Elastomer.

Besonders bevorzugt werden flüssige heißvernetzende Silikonkautschuke bzw. Silikonelastomere, insbesondere additionsvernetzende Silikonkautschuke bzw. Silikonelastomere verwendet. Ein Beispiel für ein entsprechendes Material ist der Silikonkautschuk Addisil™ 1140M der Firma Momentive™, der eine Reißfestigkeit gemäß DIN 53504:2009-10 von 12 N/mm², eine Shore-A-Härte gemäß DIN 53505 von 42 und eine Bruchdehnung gemäß DIN 53504 von 940 % aufweist.

Der erfindungsgemäße Teilkofferdam ist vorzugsweise als Mehrlayer-Stanz/Klebe-Bauteil oder als Spritzguss-Bauteil hergestellt. Bei einem Mehrlayer-Stanz/Klebe-Verfahren werden mehrere Lagen ausgestanztem Material miteinander verklebt, sodass das letztendliche Bauteil einen schichtweisen Aufbau aufweist.

Bei der Verwendung des erfindungsgemäßen Teilkofferdams zur Abschirmung von zu behandelnden Zähnen wird das Spanntuch des Teilkofferdams und ggf. die Gurte und/oder Zusatzgurte durch Ziehen an den Betätigungselementen in Zugrichtung gedehnt, im gedehnten Zustand von okklusal in wenigstens einen Zahnzwischenraum eingeführt, und durch Entspannen des Spanntuchs an die interdentale Gingiva und die Approximalflächen der den wenigstens einen Zahnzwischenraum bildenden Zähne angelegt, wobei die Betätigungselemente jeweils an wenigstens einem Zahn (vorzugsweise an die Glattfläche wenigstens eines Zahns) und/oder an der umgebenden Gingiva angelegt werden. Zur weiteren Erläuterung der Verwendung wird auf die obenstehenden Ausführungen hinsichtlich des erfindungsgemäßen Teilkofferdams verwiesen.

Die Erfindung wird nun anhand von Ausführungsbeispielen unter Bezugnahme auf die beigefügten Zeichnungen beispielhaft beschrieben. Es zeigen:
- Figur 1:: ein erstes Ausführungsbeispiel eines erfindungsgemäßen Teilkofferdams;
- Figur 2a-g:: eine beispielhafte Verwendung des Teilkofferdams aus Figur 1;
- Figur 3a,b:: ein zweites Ausführungsbeispiel eines erfindungsgemäßen Teilkofferdams;
- Figur 4:: ein drittes Ausführungsbeispiel eines erfindungsgemäßen Teilkofferdams;
- Figur 5a-f:: eine beispielhafte Verwendung des Teilkofferdams aus Figur 4; und
- Figur 6:: ein viertes Ausführungsbeispiel eines erfindungsgemäßen Teilkofferdams.

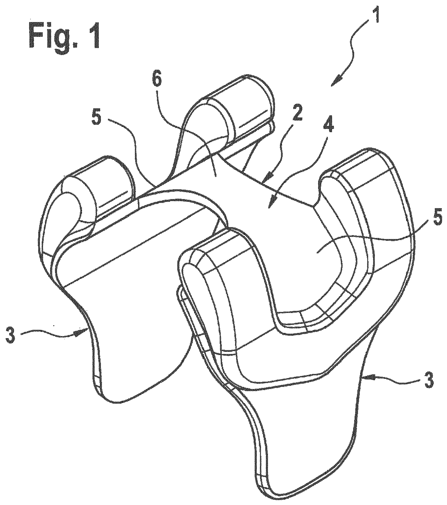

In Figur 1 ist ein erstes Ausführungsbeispiel eines erfindungsgemäßen Teilkofferdams 1 zur Abschirmung von zu behandelnden Zähnen dargestellt. Der Teilkofferdam 1 umfasst ein Spanntuch 2 aus elastischem Material und zwei, einstückig mit dem Spanntuch 2 ausgebildete Betätigungselemente 3, die an zwei gegenüberliegenden Enden des Spanntuchs 2 angeordnet sind.

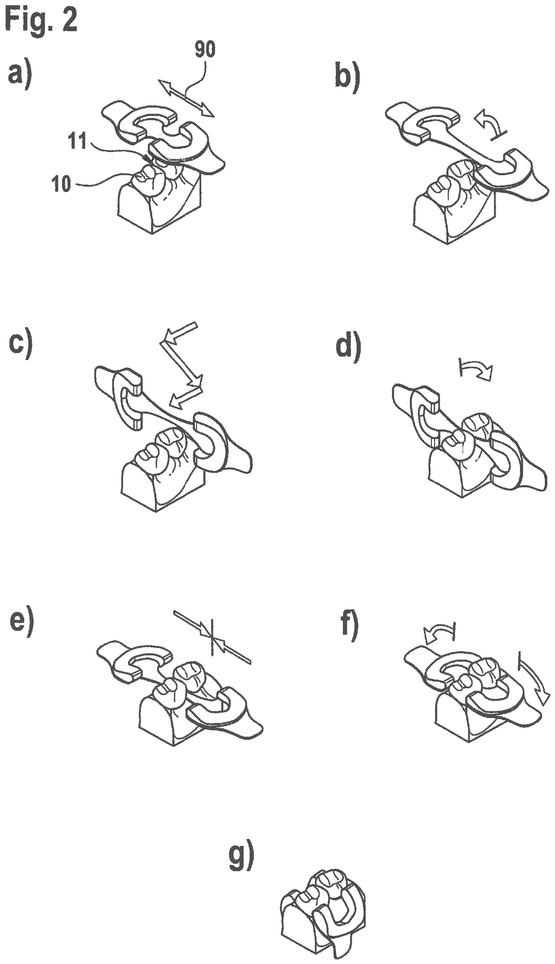

Das Spanntuch 2 weist einen sich zwischen den Betätigungselementen 3 erstreckenden Steg 4 auf, der - wie nachfolgend in Zusammenhang mit Figur 2 erläutert - zur Einführung von okklusal in einen Zahnzwischenraum vorgesehen ist. Der Steg 4 ist in Form eines abgerundeten Doppel-T ausgestaltet, wobei die den Betätigungselementen 3 naheliegenden Seitenbereiche 5 des Stegs 4 breiter sind als der diese Seitenbereiche 5 verbindende Mittelsteg 6. Die Übergänge vom Mittelsteg 6 zu den Seitenbereichen 5 sind abgerundet.

Der Steg 4 ist an seiner schmalsten Stelle im entspannten Zustand des Teilkofferdams 2,5 mm breit und 0,5 mm dick. Die Länge des Spanntuchs im dargestellten Zustand beträgt 5,5 mm. Das Spanntuch weist eine Dehnfähigkeit von 3 bei nahezu vollständigem Rückstellvermögen und eine Reißfestigkeit von größer 5 N/mm² auf, wobei die Reisfestigkeit nach DIN 53504:2009-10 mit einem S3-Prüfkörper bestimmt wurde.

Die Betätigungselemente 3 sind u-förmig ausgestaltet, wobei das offene Ende der Betätigungselemente 3 zum Spanntuch 2 zeigt. Durch eine entsprechende Formgebung der Betätigungselemente 3 wird eine gute Stabilität des Teilkofferdams 1 bei der nachfolgend in Zusammenhang mit Figur 2 erläuterten Verwendung erreicht.

Die Betätigungselemente 3 sind einstückig mit dem Spanntuch 2 ausgeführt und folglich aus dem gleichen elastischen Material wie das Spanntuch 2. Um dennoch eine ausreichende Steifigkeit der Betätigungselemente 3 zu gewährleisten, weisen diese teilweise - nämlich insbesondere im Bereich der u-förmigen Ausgestaltung - eine höhere Dicke als das Spanntuch 2 auf.

Die Verwendung des Teilkofferdams 1 gemäß Figur 1 wird nun anhand der Figur 2 erläutert. Der Teilkofferdam 1 wird dabei in einen Zahnzwischenraum 11 zwischen zwei Zähnen 10 eingeführt.

Ausgehend von dem in Figur 2a dargestellten Ausgangszustand wird der Teilkofferdam 1 durch Auseinanderziehen der Betätigungselemente 3 in eine Zugrichtung 90 gespannt, wobei insbesondere das Spanntuch 2 gedehnt wird. Der so erreichte erste Zustand des Teilkofferdams 1 ist in Figur 2b dargestellt.

Durch die Dehnung des Spanntuchs 2 verringert sich der Querschnitt des Stegs 4, sodass der Steg 4 bereits grundsätzlich von okklusal in den Zahnzwischenraum 11 eingeführt werden kann. Da der Teilkofferdam 1 nur einen einzelnen Steg 4 aufweist, kann das Einführen des Stegs 4 in den Zahnzwischenraum 11 weiter erleichtert werden, indem der Teilkofferdam um 90° gekippt wird (vgl. Figur 2c). Dadurch muss der Steg 4 nicht mit der die Breite definierenden Seite zuvorderst in den Zahnzwischenraum 11 eingeführt werden, sondern mit der die Dicke definierenden Seite. Da die Dicke im Ausgangszustand bereits kleiner ist als die Breite und darüber hinaus durch die Dehnung des Spanntuchs 2 noch weiter reduziert wird, wird das Einführen des Stegs 2 in den Zahnzwischenraum weiter vereinfacht.

Der entsprechend um 90° gekippte Teilkofferdam 1 (vgl. Figur 2c) wird in den Zahnzwischenraum 11 eingeführt (vgl. Figur 2d). Anschließend wird der Teilkofferdam 1 erneut um 90° gekippt (vgl. Figur 2e), bevor die Spannung des Spanntuchs 2 gelöst wird, sodass die Betätigungselemente 3 an den Zähnen 10 anliegen (vgl. Figur 2f). Durch das Lösen der Spannung geht die Verformung des Spanntuchs 2 zurück und es nähert sich wieder seiner ursprünglichen Form (vgl. Figur 2a) an. Dadurch wird eine dichtende Anlage des Spanntuchs 2 an die interdentale Gingiva und den Approximalflächen der Zähne 10 erreicht. Die gewünschte Abschirmung, um den Zufluss von Flüssigkeit wie bspw. Speichel oder Blut zu verhindern, ist so gewährleistet.

Abschließend werden die Betätigungselemente 3 derart verschwenkt, dass sie neben der Anlage an die Zähne 10 zusätzlich noch an der umliegenden Gingiva anliegen (vgl. Figur 2g). Dadurch wird eine gute Stabilisierung des Teilkofferdams 1 und eine gute Zugänglichkeit des Behandlungsfelds erreicht.

Wie sich anhand Figur 2 und den dazugehörigen Erläuterungen ergibt, sind für die Verwendung des erfindungsgemäßen Teilkofferdams 1 gemäß Figur 1 grundsätzlich keine Instrumente erforderlich. Nichtsdestotrotz können die Betätigungselemente 3 Öffnungen (nicht dargestellt) aufweisen, in die eine medizinische Zange eingreifen kann. Mithilfe der Zange kann der Teilkofferdam 1 gespannt und in mit rein manueller Handhabung nur schwer zugängliche Zahnzwischenräume eingeführt werden.

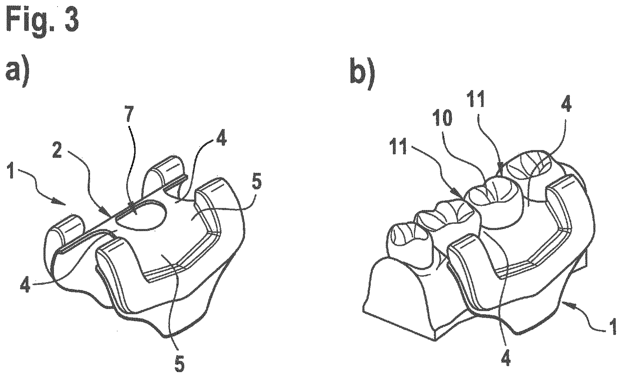

In Figur 3 ist ein zweites Ausführungsbeispiel eines erfindungsgemäßen Teilkofferdam 1 zur Abschirmung von zu behandelnden Zähnen dargestellt, wobei Figur 3b der Teilkofferdam 1 im eingesetzten Zustand zeigt. Der in Figur 3 gezeigte Teilkofferdam 1 gleicht in weiten Teilen demjenigen aus Figur 1, weshalb zur Erläuterung auf die dortigen Ausführungen verwiesen und im Folgenden lediglich auf die Unterschiede eingegangen wird.

Das Spanntuch 2 des Teilkofferdams 1 aus Figur 3 weist - anders als das Spanntuch 2 des Teilkofferdams aus Figur 1 - zwei Stege 4 auf, zwischen denen ein Freiraum 7 vorgesehen ist, durch den ein einzelner Zahn hindurchgeführt werden kann. Die Stege 4 sind doppel-T-förmig ausgebildet, wobei die Seitenbereiche 5 der beiden Stege 4 ineinander übergehen.

In Figur 3b ist der Teilkofferdam 1 im eingesetzten Zustand gezeigt, wobei die beiden Stege 4 in jeweils einen Zahnzwischenraum 11 eingeführt sind und ein Zahn 10 durch den Freiraum 7 hindurchgeführt ist. Die Verwendung des Teilkofferdams aus Figur 3 ist vergleichbar mit der in Figur 2 dargestellten, ohne dass der Teilkofferdam 1 für das Einführen in die Zahnzwischenräume 11 jedoch gekippt wird (vgl. Figur 2b und 2d).

In den Ausführungsbeispielen gemäß Figuren 1 und 3 ist der Teilkofferdam 1 jeweils im Spritzgussverfahren aus 2-Komponenten-Silikonen , beispielsweise aus ELASTOSIL® LR 3040/45 A/B gemäß Datenblattversion 1.3 (Materialnummer 60082563) oder ELASTOSIL® LR 3040/50 A/B gemäß Datenblattversion 1.17 (Materialnummer 60071686) der Wacker Chemie AG, hergestellt. Es ist aber auch möglich, einen anderen Werkstoff, bspw. ein thermoplastisches Elastomer, oder ein anderes Herstellungsverfahren, bspw. ein Mehrlayer-Stanz/Klebe-Verfahren, zu verwenden.

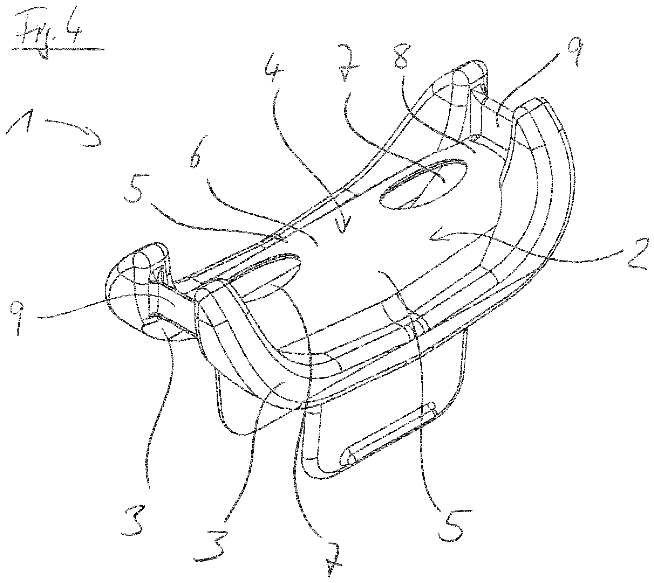

In Figur 4 ist ein drittes Ausführungsbeispiel eines erfindungsgemäßen Teilkofferdams 1 gezeigt, wobei der Teilkofferdam 1 in seinem entspannten Zustand dargestellt ist. Wie unmittelbar in Figur 4 zu erkennen ist, weist der Teilkofferdam 1 im dargestellten entspannten Zustand einen u-förmigen Querschnitt auf.

Wie auch bei den vorstehenden Ausführungsbeispielen, umfasst der Teilkofferdam 1 ein elastisch verformbares Spanntuch 2, welches sich zwischen zwei Betätigungselementen 3 erstreckt. Das Spanntuch 2 umfasst einen als Doppel-T ausgestalteten Steg 4, dessen den Betätigungselementen 3 naheliegende Seitenbereiche 5 breiter sind als der dazwischen liegende Mittelsteg 6. Der Steg 4 weist an seiner schmalsten Stelle in entspannten Zustand eine Breite von 5,5 mm auf und ist 0,3 mm dick.

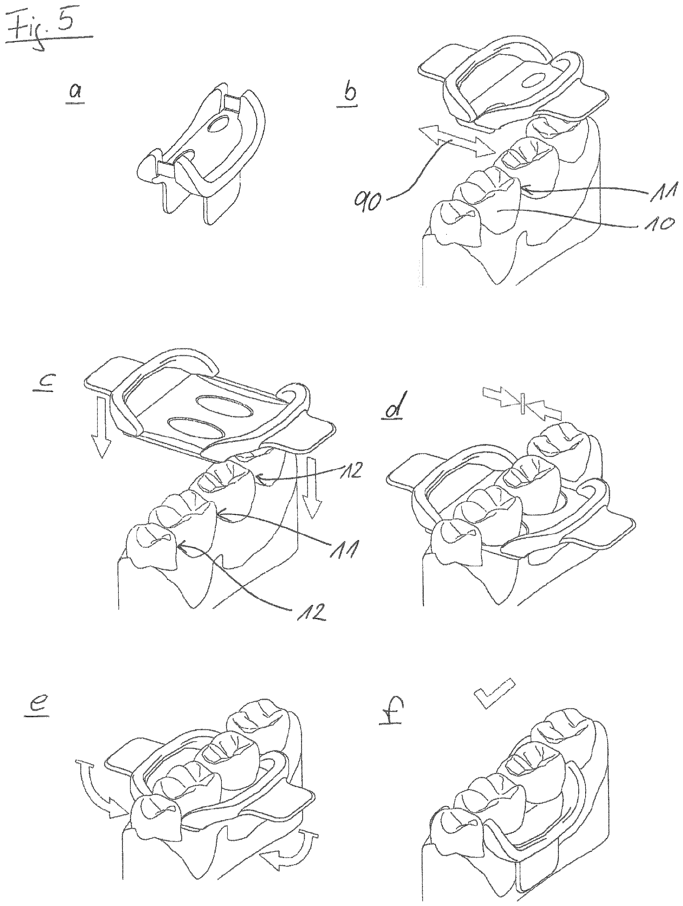

Parallel zum Steg 4 verlaufen zu beiden Seiten desselben zwei Gurte 8, über die die beiden Betätigungselemente 3 zusätzlich miteinander verbunden sind. Die Gurte 8 weisen an ihrer schmalsten Stelle eine Breite von 1,5 mm auf und sind einstückig mit dem Spanntuch 2 ausgestaltet. Die sich jeweils zwischen Steg 4 und Gurt 8 ergebende Freiraum 7 ist elliptisch ausgestaltet, wobei die größere Halbachse 2,5 mm und die kleinere Halbachse 1,1 mm ist. Durch diese Ausgestaltung können im ersten Zustand des Teilkofferdams 1, in dem die Betätigungselemente 3 auseinandergezogen werden, Zähne vereinfacht durch die Freiräume 7 hindurchgeführt und Steg 4 sowie Gurte 8 in Zahnzwischenräume eingeführt werden. Dies wird später anhand von Figuren 5a-f noch weiter erläutert.

Im dargestellten entspannten Zustand verläuft zur Bildung des u-förmigen Querschnitts das Spanntuch 2 derart gekrümmt, dass die beiden Betätigungselemente 3 um eine zentrale Mittelebene gespiegelt angeordnet sind. Die Betätigungselemente 3 sind einstückig mit dem Spanntuch 2 ausgeführt und daher aus demselben elastischen Material wie das Spanntuch 2. Um eine erhöhte Steifigkeit im Bereich der Betätigungselemente 3 zu erreichen, weisen diese in Teilen eine höhere Dicke als das Spanntuch 2 auf.

Die Betätigungselemente 3 sind u-förmig ausgebildet, wobei das jeweils offene Ende der Betätigungselemente 3 zum Spanntuch 2 zeigt. Aufgrund der Krümmung des Spanntuchs 2 ragen die Schenkel der u-förmigen Betätigungselemente 3 über das Spanntuch 2 hinaus. In diesem über das Spanntuch 2 hinausragenden Bereich sind die gegenüberliegenden Schenkel der Betätigungselemente 3 jeweils durch Zusatzgurte 9 miteinander verbunden, die einstückig mit den Betätigungselementen 3 ausgebildet und somit aus demselben elastischen Material wie die Betätigungselemente 3 und das Spanntuch 2 sind. Durch diese elastisch verformbaren Zusatzgurte 9 wird der Sitz des Teilkofferdams 1 im Verwendungszustand weiter verbessert. Die Zusatzgurte 9 sind in Richtung senkrecht zum Spanntuch 2 ca. 2 mm breit und weisen eine Dicke von ca. 0,3 mm auf.

Der in Figur 4 dargestellte Teilkofferdam 1 ist einstückig im Spritzgussverfahren hergestellt. Das Material des Teilkofferdams 1 ist der Silikonkautschuk Addisil™ 1140M der Firma Momentive™, der eine Reißfestigkeit gemäß
DIN 53504:2009-10 von 12 N/mm², eine Shore-A-Härte gemäß DIN 53505 von 42 und eine Bruchdehnung gemäß DIN 53504 von 940 % aufweist.

In Figuren 5a-f ist die Verwendung des Teilkofferdams 1 aus Figur 4 dargestellt. Der Steg 4 des Teilkofferdam 1 soll dabei in einen Zahnzwischenraum 11 zwischen zwei Zähnen 10 eingeführt werden, um diesen Zahnzwischenraum 11 vom übrigen Mundraum abzuschirmen.

Ausgehend von dem in Figur 5a dargestellten Ausgangszustand wird der Teilkofferdam 1 durch Auseinanderziehen der Betätigungselemente 3 in eine Zugrichtung 90 gespannt (vgl. Figur 5b), wobei insbesondere das Spanntuch 2 mit dem Steg 4 und den Gurten 8 gedehnt wird. Auch die Zusatzgurte 9 werden gedehnt. Der so erreichte erste Zustand des Teilkofferdams 1 ist in Figur 5c dargestellt.

In dem gedehnten ersten Zustand lässt sich der Steg 4 aufgrund der damit verbundenen Verformung leicht in den Zahnzwischenraum 11 einführen. Die Gurte 8 und Zusatzgurte 9 werden gleichzeitig in die zu dem Zahnzwischenraum 11, in den der Steg 4 eingeführt wird, benachbarten Zahnzwischenräume 12 eingeführt. In anderen Worten werden die den Zahnzwischenraum 11 bildenden Zähne 10 durch die Freiräume 7 im Spanntuch 2 des Teilkofferdam 1 geführt.

Sind Steg 6 und Gurte 8, 9 in die entsprechenden Zahnzwischenräume 11, 12 eingeführt, wird der Teilkofferdam 2 wieder entspannt (vgl. Figur 5d). Durch das Lösen der Spannung geht die Verformung des Spanntuchs 2 zurück und der Steg 4 legt sich dichtend an die interdentale Gingiva und den Approximalflächen der Zähne 10 an. Die gewünschte Abschirmung, um den Zufluss von Flüssigkeit wie bspw. Speichel oder Blut zu verhindern, ist so gewährleistet.

Abschließend werden die Betätigungselemente 3 derart verschwenkt (vgl. Figur 5e), dass sie sowohl an den Zähnen 10 als auch an der umliegenden Gingiva anliegen (vgl. Figur 5f). Dadurch wird eine gute Stabilisierung des Teilkofferdams 1 und eine gute Zugänglichkeit des Behandlungsfelds erreicht.

Wie sich anhand Figur 5 und den dazugehörigen Erläuterungen ergibt, sind auch für die Verwendung des erfindungsgemäßen Teilkofferdams 1 gemäß Figur 4 grundsätzlich keine Instrumente erforderlich. Nichtsdestotrotz können die Betätigungselemente 3 Öffnungen (nicht dargestellt) aufweisen, in die eine medizinische Zange eingreifen kann. Mithilfe der Zange kann der Teilkofferdam 1 gespannt und in mit rein manueller Handhabung nur schwer zugängliche Zahnzwischenräume eingeführt werden.

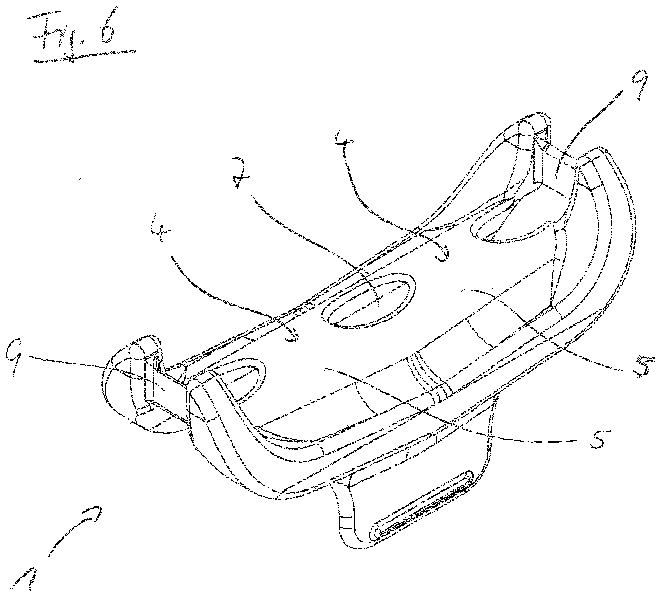

In Figur 6 ist ein weiteres Ausführungsbeispiel eines erfindungsgemäßen Teilkofferdams 1 zur Abschirmung von zu behandelnden Zähnen dargestellt. Der in Figur 6 gezeigte Teilkofferdam 1 gleicht in weiten Teilen demjenigen aus Figur 4, weshalb zur Erläuterung auf die dortigen Ausführungen verwiesen und im Folgenden lediglich auf die Unterschiede eingegangen wird.

Das Spanntuch 2 des Teilkofferdams 1 aus Figur 6 weist - anders als das Spanntuch 2 des Teilkofferdams aus Figur 4 - zwei Stege 4 auf, zwischen denen ein Freiraum 7 vorgesehen ist, durch den ein einzelner Zahn hindurchgeführt werden kann. Die Stege 4 sind doppel-T-förmig ausgebildet, wobei die Seitenbereiche 5 der beiden Stege 4 ineinander übergehen. Der Freiraum 7 ist elliptisch ausgestaltet.

Im Gegensatz zu dem Ausführungsbeispiel aus Figur 4 sind bei dem Teilkofferdam 1 in Figur 6 lediglich Zusatzgurte 9, aber keine Gurte 8 vorgesehen. Selbstverständlich können aber auch bei dem Teilkofferdam 1 gemäß Figur 6 noch Gurte 8 vorgesehen sein.

Bei Verwendung des Teilkofferdams 1 aus Figur 6 werden die Stege 4 in zwei benachbarte Zahnzwischenräume 11 eingeführt, während die Zusatzgurte 9 in die daran zu beiden Seiten anschließenden Zahnzwischenräume 12 eingeführt werden. Der Teilkofferdam 1 ist dabei aus dem gleichen Material wie derjenige aus Figur 4 in einem Spritzgussverfahren hergestellt.

## Patentansprüche

1. Teilkofferdam (1) zur Abschirmung von zu behandelnden Zähnen umfassend ein Spanntuch (2) aus elastischem Material und zwei an gegenüberliegenden Enden des Spanntuchs (2) angeordnete Betätigungselemente (3), wobei das Spanntuch (2) in einem ersten, durch Auseinanderziehen der Betätigungselemente (3) in eine Zugrichtung (90) erreichbaren gespannten Zustand zur Einführung von okklusal in wenigstens einen Zahnzwischenraum (11) und in einem zweiten Zustand nach Einführung in wenigstens einen Zahnzwischenraum (11) zur dichten Anlage an der interdentalen Gingiva und den Approximalflächen der den wenigstens einen Zahnzwischenraum (11) bildenden Zähne (10) ausgebildet ist, wobei die Betätigungselemente (3) im zweiten Zustand jeweils an wenigstens einem Zahn (10) und/oder an der umgebenden Gingiva anliegen, **dadurch gekennzeichnet, dass** die Betätigungselemente (3) u-förmig ausgestaltet sind und das offene Ende der Betätigungselemente (3) zum Spanntuch (2) zeigt.

2. Teilkofferdam nach Anspruch 1,
**dadurch gekennzeichnet, dass**
das Spanntuch (2) mindestens eine der nachfolgend genannten Eigenschaften aufweist:
a. eine Dehnfähigkeit von 1 bis 4, vorzugsweise von 2 bis 3 bei nahezu vollständigem Rückstellvermögen und / oder
b. eine Reißfestigkeit gemäß DIN 53504:2009-10 von größer 5 N/mm².

3. Teilkofferdam nach einem der vorhergehenden Ansprüche,
**dadurch gekennzeichnet, dass**
das Spanntuch (2) eine der Anzahl der abzudichtenden Zwischenräume (11) entsprechende Anzahl an sich zwischen den Betätigungselementen (3) erstreckenden Stegen (4) zur Einführung von okklusal in jeweils einen Zahnzwischenraum (11) aufweist.

4. Teilkofferdam nach Anspruch 3,
**dadurch gekennzeichnet, dass**
der wenigstens eine Steg (4) in Form eines abgerundeten Doppel-T ausgestaltet ist.

5. Teilkofferdam nach Anspruch 3 oder 4,
**dadurch gekennzeichnet, dass**
der wenigstens eine Steg (4) an seiner schmalsten Stelle im entspannten Zustand 2 mm bis 8 mm, vorzugsweise 3 mm bis 7 mm, weiter vorzugsweise 5 mm bis 6 mm breit ist und/oder die Länge des Spanntuchs (2) im entspannten Zustand weniger als 10 mm, vorzugsweise 4 mm bis 8 mm, weiter vorzugsweise 4,5 mm bis 6,5 mm, weiter vorzugsweise 5,5 mm ist.

6. Teilkofferdam nach einem der vorhergehenden Ansprüche,
**dadurch gekennzeichnet, dass**
die Dicke des Spanntuchs (2) oder eines Stegs (4) im entspannten Zustand des Teilkofferdams kleiner gleich 1 mm, vorzugsweise zwischen 0,1 mm bis 0,5 mm, weiter vorzugsweise 0,1 mm bis 0,3 mm ist.

7. Teilkofferdam nach einem der vorhergehenden Ansprüche,
**dadurch gekennzeichnet, dass**
wenigstens ein Gurt (8) zwischen den beiden Betätigungselementen (3) vorgesehen ist, wobei der Gurt (8) in der Ebene des wenigstens einen Stegs (4) verläuft und zur Einführung in einen zu einem Zahnzwischenraum (11), in den der wenigstens eine Steg (4) eingeführt wird, benachbarten Zahnzwischenraum (12) ausgebildet ist.

8. Teilkofferdam nach Anspruch 7,
**dadurch gekennzeichnet, dass**
zwei Gurte (8) vorgesehen sind, wobei der wenigstens eine Steg (4) zwischen den beiden Gurten (8) angeordnet ist.

9. Teilkofferdam nach einem der Ansprüche 7 oder 8,
**dadurch gekennzeichnet, dass**
die Betätigungselemente (3) einstückig mit dem wenigstens einen Gurt (8) und dem Spanntuch (2) ausgeführt sind, wobei die Betätigungselemente (3) vorzugsweise eine höhere Dicke als das Spanntuch (2) aufweisen.

10. Teilkofferdamm nach einem der Ansprüche 7 bis 9,
**dadurch gekennzeichnet, dass**
der zwischen einem Steg (4) und einem Gurt (8) entstehende Freiraum (7) rund, kreisrund oder oval, vorzuweise elliptisch ausgestaltet, ist.

11. Teilkofferdamm nach einem der vorhergehenden Ansprüche,
**dadurch gekennzeichnet, dass**
der zwischen zwei benachbarten Stegen (4) entstehende Freiraum (7) rund, kreisrund oder oval, vorzuweise elliptisch ausgestaltet, ist.

12. Teilkofferdam nach einem der vorhergehenden Ansprüche,
**dadurch gekennzeichnet, dass**
der Teilkofferdamm (1) im entspannten Zustand einen bogenförmigen oder u-förmigen Querschnitt aufweist, sodass das Spanntuch (2) im entspannten Zustand eine Krümmung senkrecht zum Mittelsteg (6) des wenigstens einen Steges (4) aufweist und die beiden Betätigungselemente (3) um eine Ebene normal zur Richtung des Mittelstegs (6) des wenigstens einen Stegs (4) gespiegelt angeordnet sind.

13. Teilkofferdam nach Anspruch 12,
**dadurch gekennzeichnet, dass**
Schenkel der u-förmigen Betätigungselemente (3) über das gekrümmt verlaufende Spanntuch (2) hinausragen und die jeweils gegenüberliegenden Schenkel der der u-förmigen Betätigungselemente (3) über elastisch verformbare Zusatzgurte (9) miteinander verbunden sind.

14. Teilkofferdam nach einem der vorhergehenden Ansprüche,
**dadurch gekennzeichnet, dass**
die Betätigungselemente (3) einstückig mit dem Spanntuch (2) und/oder dem wenigstens einen Zusatzgurt (9) ausgeführt sind, wobei die Betätigungselemente (3) vorzugsweise eine höhere Dicke als das Spanntuch (2) aufweisen.

15. Verwendung des Teilkofferdams gemäß Anspruch 1, wobei
das Spanntuch (2) durch Ziehen an den Betätigungselementen (3) in Zugrichtung (90) gedehnt wird,
das Spanntuch (2) im gedehnten Zustand von okklusal in wenigstens einen Zahnzwischenraum (11) eingeführt wird, und
durch Entspannen das Spanntuchs (2) an die interdentale Gingiva und die Approximalflächen der den wenigstens einen Zahnzwischenraum (11) bildenden Zähne (10) angelegt wird, wobei die Betätigungselemente (3) jeweils an wenigstens einem Zahn (10) und/oder an der umgebenden Gingiva angelegt werden.

## Claims

1. Partial dental dam (1) for shielding teeth to be treated, comprising a tensioning cloth (2) made of elastic material and two actuation elements (3) arranged on opposite ends of the tensioning cloth (2), wherein the tensioning cloth (2) is designed to be introduced into at least one intermediate tooth space (11) from the occlusal side in a first tensioned state, which can be achieved by pulling the actuation elements (3) apart in a tensioning direction (90), and to bear sealingly on the interdental gingiva and the approximal surfaces of the teeth (10) forming the at least one intermediate tooth space (11) in a second state after introduction into at least one intermediate tooth space (11), wherein the actuation elements (3) each bear on at least one tooth (10) and/or on the surrounding gingiva in the second state, **characterized in that** the actuation elements (3) are U-shaped and the open end of the actuation elements (3) points toward the tensioning cloth (2).

2. Partial dental dam according to Claim 1, **characterized in that** the tensioning cloth (2) has at least one of the following properties:
a. an extensibility of 1 to 4, preferably of 2 to 3, with an almost complete restoring capacity, and/or
b. a tear strength of greater than 5 N/mm² as per DIN 53504:2009-10.

3. Partial dental dam according to either of the preceding claims, **characterized in that** the tensioning cloth (2) has a number of webs (4) corresponding to the number of intermediate spaces (11) to be sealed off, which webs (4) extend between the actuation elements (3) and are each introduced from the occlusal side into an intermediate tooth space (11).

4. Partial dental dam according to Claim 3, **characterized in that** the at least one web (4) is configured in the shape of a rounded double T.

5. Partial dental dam according to Claim 3 or 4, **characterized in that** the at least one web (4), at its narrowest point, has a width of 2 mm to 8 mm, preferably of 3 mm to 7 mm, more preferably of 5 mm to 6 mm in the untensioned state, and/or the length of the tensioning cloth (2) is less than 10 mm, preferably 4 mm to 8 mm, more preferably 4.5 mm to 6.5 mm, more preferably 5.5 mm, in the untensioned state.

6. Partial dental dam according to one of the preceding claims, **characterized in that** the thickness of the tensioning cloth (2) or of a web (4), in the untensioned state of the partial dental dam, is less than or equal to 1 mm, preferably between 0.1 mm and 0.5 mm, more preferably between 0.1 mm and 0.3 mm.

7. Partial dental dam according to one of the preceding claims, **characterized in that** at least one strap (8) is provided between the two actuation elements (3), wherein the strap (8) extends in the plane of the at least one web (4) and is designed to be introduced into an intermediate tooth space (12) adjacent to an intermediate tooth space (11) into which the at least one web (4) is introduced.

8. Partial dental dam according to Claim 7, **characterized in that** two straps (8) are provided, wherein the at least one web (4) is arranged between the two straps (8).

9. Partial dental dam according to either of Claims 7 and 8, **characterized in that** the actuation elements (3) are designed in one piece with the at least one strap (8) and the tensioning cloth (2), wherein the actuation elements (3) preferably have a greater thickness than the tensioning cloth (2).

10. Partial dental dam according to one of Claims 7 to 9, **characterized in that** the free space (7) resulting between a web (4) and a strap (8) is round, circular or oval, preferably elliptic.

11. Partial dental dam according to one of the preceding claims, **characterized in that** the free space (7) resulting between two adjacent webs (4) is round, circular or oval, preferably elliptic.

12. Partial dental dam according to one of the preceding claims, **characterized in that** the partial dental dam (1), in the untensioned state, has an arc-shaped or U-shaped cross section, such that the tensioning cloth (2), in the untensioned state, has a curvature perpendicular to the middle web (6) of the at least one web (4), and the two actuation elements (3) are arranged in mirror symmetry about a plane normal to the direction of the middle web (6) of the at least one web (4).

13. Partial dental dam according to Claim 12, **characterized in that** branches of the U-shaped actuation elements (3) protrude over the curved tensioning cloth (2), and the respective opposite branches of the U-shaped actuation elements (3) are connected to each other via elastically deformable auxiliary straps (9).

14. Partial dental dam according to one of the preceding claims, **characterized in that** the actuation elements (3) are designed in one piece with the tensioning cloth (2) and/or the at least one auxiliary strap (9), wherein the actuation elements (3) preferably have a greater thickness than the tensioning cloth (2).

15. Use of the partial dental dam according to Claim 1, wherein the tensioning cloth (2) is elongated by pulling on the actuation elements (3) in the tensioning direction (90), the tensioning cloth (2) is introduced in the elongated state into at least one intermediate tooth space (11) from the occlusal side, and the tensioning cloth (2) is placed on the interdental gingiva and the approximal surfaces of the teeth (10) forming the at least one intermediate tooth space (11) by releasing the tensioning force, wherein the actuation elements (3) each bear on at least one tooth (10) and/or on the surrounding gingiva.

## Revendications

1. Digue dentaire partielle (1) destinée à protéger des dents à traiter et comprenant une toile extensible (2) en matériau élastique et deux éléments d'actionnement (3) disposés à des extrémités opposées de la toile extensible (2), la toile extensible (2) étant conçue, dans un premier état tendu pouvant être obtenu par écartement des éléments d'actionnement (3) dans une direction de traction (90), pour être introduite de manière occlusale dans au moins un espace interdentaire (11) et, dans un deuxième état après insertion dans au moins un espace interdentaire (11), pour venir en appui serré sur la gencive interdentaire et les surfaces proximales des dents (10) formant l'au moins un espace interdentaire (11), les éléments d'actionnement (3) venant chacun en appui, dans le deuxième état, sur au moins une dent (10) et/ou sur la gencive environnante,
**caractérisée en ce que**
les éléments d'actionnement (3) sont en forme de U et l'extrémité ouverte des éléments d'actionnement (3) pointe vers la toile extensible (2).

2. Digue dentaire partielle selon la revendication 1,
**caractérisée en ce que**
la toile extensible (2) présente l'une au moins des propriétés suivantes :
a. une extensibilité de 1 à 4, de préférence de 2 à 3 avec une capacité de retour presque complet et/ou
b. une résistance à la déchirure supérieure à 5 N/mm² selon DIN 53504:2009-10.

3. Digue dentaire partielle selon l'une des revendications précédentes,
**caractérisée en ce que**
la toile extensible (2) comporte un certain nombre de nervures (4) correspondant au nombre d'espaces interdentaires (11) à rendre étanches, lesdites nervures s'étendant entre les éléments d'actionnement (3) et étant destinées à être introduites chacune de manière occlusale dans un espace interdentaire (11).

4. Digue dentaire partielle selon la revendication 3,
**caractérisée en ce que**
l'au moins une nervure (4) est conçue en forme de double T arrondi.

5. Digue dentaire partielle selon la revendication 3 ou 4,
**caractérisée en ce que**
l'au moins une nervure (4) a à son point le plus étroit à l'état relâché une largeur de 2 mm à 8 mm, de préférence de 3 mm à 7 mm, plus préférablement de 5 mm à 6 mm et/ou la longueur de la toile extensible (2) à l'état relâché est inférieure à 10 mm, de préférence est de 4 mm à 8 mm, plus préférablement est de 4,5 mm à 6,5 mm, plus préférablement est de 5,5 mm.

6. Digue dentaire partielle selon l'une des revendications précédentes,
**caractérisée en ce que**
l'épaisseur de la toile extensible (2) ou d'une nervure (4) à l'état relâché de la digue dentaire partielle est inférieure ou égale à 1 mm, de préférence est de 0,1 mm à 0,5 mm, plus préférablement est de 0,1 mm à 0,3 mm.

7. Digue dentaire partielle selon l'une des revendications précédentes,
**caractérisée en ce que**
au moins une sangle (8) est prévue entre les deux éléments d'actionnement (3), la sangle (8) s'étendant dans le plan de l'au moins une nervure (4) et étant conçue pour être insérée dans un espace interdentaire (12) adjacent à l'espace interdentaire (11) dans lequel l'au moins une nervure (4) est insérée.

8. Digue dentaire partielle selon la revendication 7,
**caractérisée en ce que**
deux sangles (8) sont prévues, l'au moins une nervure (4) étant disposée entre les deux sangles (8).

9. Digue dentaire partielle selon l'une des revendications 7 et 8,
**caractérisée en ce que**
les éléments d'actionnement (3) sont réalisés d'une seule pièce avec au moins une sangle (8) et la toile extensible (2), les éléments d'actionnement (3) ayant de préférence une épaisseur supérieure à celle de la toile extensible (2).

10. Digue dentaire partielle selon l'une des revendications 7 à 9,
**caractérisée en ce que**
l'espace libre (7) entre une nervure (4) et une sangle (8) est rond, circulaire ou ovale, de forme elliptique.

11. Digue dentaire partielle selon l'une des revendications précédentes,
**caractérisée en ce que**
l'espace libre (7) entre deux nervures adjacentes (4) est rond, circulaire ou ovale, de préférence elliptique.

12. Digue dentaire partielle selon l'une des revendications précédentes,
**caractérisée en ce que**
la digue dentaire partielle (1) à l'état relâché présente une section transversale incurvée ou en forme de U de sorte que la toile extensible (2) à l'état relâché présente une courbure perpendiculaire à la nervure médiane (6) de l'au moins une nervure (4) et les deux éléments d'actionnement (3) sont disposés symétriquement autour d'un plan normal à la direction de la nervure médiane (6) de l'au moins une nervure (4).

13. Digue dentaire partielle selon la revendication 12,
**caractérisée en ce que**
des branches des éléments d'actionnement (3) en forme de U font saillie de la toile extensible incurvée (2) et les branches opposées des éléments d'actionnement (3) en forme de U sont reliées entre elles par le biais de sangles supplémentaires (9) déformables élastiquement.

14. Digue dentaire partielle selon l'une des revendications précédentes,
**caractérisée en ce que**
les éléments d'actionnement (3) sont fabriqués d'une seule pièce avec la toile extensible (2) et/ou l'au moins une sangle supplémentaire (9), les éléments d'actionnement (3) ayant de préférence une épaisseur supérieure à celle de la toile extensible (2).

15. Utilisation de la digue dentaire partielle selon la revendication 1,
la toile extensible (2) étant étirée dans le sens de traction (90) par traction exercée sur les éléments d'actionnement (3),
la toile extensible (2) étant insérée à l'état étiré de manière occlusale dans au moins un espace interdentaire (11) et
la toile extensible (2) étant appliquée par détente sur la gencive interdentaire et les surfaces proximales des dents (10) formant l'au moins un espace interdentaire (11), les éléments d'actionnement (3) étant chacun appliqués sur au moins une dent (10) et/ou la gencive environnante.
